# EUROPÄISCHE PATENTSCHRIFT

(11) **EP 2 758 690 B1**
(45) Veröffentlichungstag und Bekanntmachung des Hinweises auf die Patenterteilung: **26.02.2020**
(21) Anmeldenummer: 12777850.4
(22) Anmeldetag: 24.08.2012
(51) Int. Cl.: F16F 15/14

(54) **FLIEHKRAFTPENDEL**
CENTRIFUGAL FORCE PENDULUM
PENDULE CENTRIFUGE

(30) Priorität: 19.09.2011 DE 102011082959
(43) Veröffentlichungstag der Anmeldung: 30.07.2014
(73) Patentinhaber: Schaeffler Technologies AG & Co. KG, 91074 Herzogenaurach (DE)
(72) Erfinder: RUSCH, Alain, F-67170 Brumath (FR); HÄSSLER, Martin, 76676 Graben-Neudorf (DE)
(86) Internationale Anmeldenummer: PCT/DE2012/000863
(87) Internationale Veröffentlichungsnummer: WO 2013/041073

(56) Entgegenhaltungen:
- DE-A1-102008 005 138
- DE-A1-102009 029 071
- DE-A1-102010 049 930

## Beschreibung

Die Erfindung betrifft ein Fliehkraftpendel mit einem um eine Drehachse verdrehbar angeordneten Pendelflansch und mehreren zur drehzahladaptiven Tilgung von in den Pendelflansch eingetragenen Drehschwingungen mit einem Masseschwerpunkt um zumindest einen Pendelpunkt mit vorgegebenem Pendelradius und vorgegebenem Schwingwinkel verschwenkbar aufgenommenen Pendelmassen.

Zur Reduzierung von Drehschwingungen wie Torsionsschwingungen von Brennkraftmaschinen mit über den Drehwinkel ungleicher Verbrennung beispielsweise infolge mehrerer nacheinander zündender Zylinder werden ausschließlich oder mit anderen Drehschwingungsdämpfern wie Zweimassenschwungräder und dergleichen sogenannte Fliehkraftpendel eingesetzt, die einen meist koaxial zur Kurbelwelle der Brennkraftmaschine um eine Drehachse drehenden Pendelflansch aufweisen, an dem mehrere, über den Umfang verteilte Pendelmassen verschwenkbar aufgenommen sind. Diese Pendelmassen werden durch Fliehkraft des drehenden Pendelflansches bedingt nach radial außen beschleunigt und führen im Feld der Zentrifugalbeschleunigung Schwingungen auf vorgegebenen Bahnen aus, wenn sie durch Drehzahlungleichförmigkeiten angeregt werden. Durch diese Schwingungen wird der Erregerschwingung zu passenden Zeiten Energie entzogen und wieder zugeführt, so dass es zu einer Beruhigung der Erregerschwingung kommt. Hierbei wirkt das Fliehkraftpendel als Drehschwingungstilger. Da sowohl die Eigenfrequenz der Fliehkraftpendelschwingung als auch die Erregerfrequenz proportional zur Drehzahl sind, kann eine drehschwingungstilgende Wirkung eines Fliehkraftpendels drehzahladaptiv über den gesamten Frequenzbereich der von einer Brennkraftmaschine erzeugten Drehschwingungen erzielt werden.

Hierbei wandern infolge der vorgegebenen Bahnen der Pendelmassen bei Auslenkung aus der neutralen Lage die Masseschwerpunkte der Pendelmasse nach radial innen in Richtung Drehachse und es ergibt sich aufgrund der Fliehkraft und der Neigung der vorgegebenen Bahn eine rückstellende Wirkung der Masseschwerpunkte und damit der Pendelmasse in die neutrale Lage, als in radial nach außen verlängerter Position der Pendelpunkte der Pendelmassen. Sind die vorgegebenen Bahnen so gestaltet, dass sich der Masseschwerpunkt auf einer Kreisbahn bewegt, herrscht - was die Zunahme der rückstellenden Kraft mit steigender Auslenkung angeht - eine vollständige Analogie zwischen Fliehkraftpendel und einem einfachen Fadenpendel. Alternativ können die Bahnen so ausgebildet sein, dass diese einer bifilaren Aufhängung der Pendelmassen gleichen.

Voraussetzung für eine gewünschte Tilgerwirkung ist neben einer Vorgabe von Wirkradius und Pendellänge zur Abstimmung auf die Erregerordnung des Erregers wie Brennkraftmaschine eine Mindestmasse der Pendelmassen sowie ein vorgegebener Schwingwinkel der Masseschwerpunkte der Pendelmassen. Soll ein Fliehkraftpendel beispielsweise auf einer Kupplungsscheibe angebracht werden, können aufgrund der gegebenen Einbauverhältnisse die Masse der Pendelmasse und die Schwingwinkel begrenzt sein, so dass mit Anschlägen für die Pendelmassen gearbeitet werden muss, die den Bauraum begrenzen. Hierbei kann die angestrebte Tilgerwirkung beeinträchtigt werden.

Neben dort auftretenden Anschlaggeräuschen bei hohen Schwingwinkeln im regulären Tilgerbetrieb können Anschlaggeräusche auftreten, wenn unter Schwerkrafteinfluss bei niedrigen Drehzahlen des Pendelflansches die vorübergehend über der Drehachse des Pendelflansches befindlichen Pendelmassen von einer fliehkraftbedingten radial äußeren Bahn nach radial innen gegen einen Anschlag fallen oder wenn Start und Stopp des Motors, schnelles Einkuppeln oder hohe Drehungleichförmigkeiten maximale Beschleunigungen der Pendelmassen bewirken.

Zur Dämpfung dieser Anschlaggeräusche werden gewöhnlich Elastomerelemente eingesetzt, die beim Anschlag der Pendelmassen einen Anteil der kinetischen Energie aufnehmen und dadurch das Geräusch reduzieren. Die Lebensdauer von Elastomerelementen bei erhöhter Umgebungstemperatur ist eingeschränkt. Darüberhinaus kann hochenergetisches Anschlagen zu einer Beschädigung der Elastomerelemente führen. Der Einsatz zusätzlicher Teile wie Elastomerelemente und ihre Befestigungselemente erfordert Einbauraum und bedeutet zusätzliche Kosten.

Die DE 10 2008 005138 A1 offenbart ein Fliehkraftpendel, in welchem die Pendelrollenbahnen und die Trägerrollenbahnen für die Pendelrollen so aufeinander abgestimmt sind, dass im normalen Betrieb ein Anschlagen der Pendelrollen an den Rollenbahnen verhindert wird.

Aufgabe der Erfindung ist daher, ein Fliehkraftpendel vorzuschlagen, bei dem die Anschlaggeräusche ohne zusätzlichen Teileaufwand vermindert werden.

Die Aufgabe wird durch ein Fliehkraftpendel nach Anspruch 1, mit einem um eine Drehachse verdrehbar angeordneten Pendelflansch und mehreren zur drehzahladaptiven Tilgung von in den Pendelflansch eingetragenen Drehschwingungen mit einem Masseschwerpunkt um zumindest einen Pendelpunkt mit vorgegebenem Pendelradius und vorgegebenem Schwingwinkel verschwenkbar aufgenommenen Pendelmassen gelöst, wobei der vorgegebene Schwingwinkel um einen Pendelwinkel mit einem gegenüber dem Pendelradius verringertem Pendelradius verändert ist. Durch eine derartige Ausbildung einer Bahn des Masseschwerpunkts, die den Pendelmassen Energie insbesondere in Fällen, in denen die Fliehkraft sehr schwach und die Bewegung der Pendelmassen von der Wirkung der Schwerkraft bestimmt wird oder in denen maximale Beschleunigungen der Pendelmassen auftreten, entziehen, können durch den Entzug von kinetischer Energie Anschlaggeräusche vermindert werden, ohne zusätzliche Bauteile einsetzen zu müssen. Vielmehr ist hierzu lediglich - wie vorgeschlagen - eine Änderung der Bahnen der Pendelmassen nötig.

Hierbei wird die Wirkung des Fliehkraftpendels im normalen Tilgerbetrieb nicht eingeschränkt, da der Bahnverlauf für den Tilgerbetrieb derselbe bleibt. Vielmehr wird der Schwingwinkel bei geändertem Bahnverlauf erweitert. Hierbei ist der Bahnverlauf des erweiterten Schwingwinkels so gestaltet, dass die Pendelmasse, wenn sie radial oberhalb aus gegenüber der Drehachse des Pendelflansches etwa senkrechter Stellung heraus von einem Bahnende in das gegenüberliegende mit geringerer potentieller Energie versehene Bahnende fällt, zum Ende der Fallbewegung gegen die Schwerkraft angehoben und somit abgebremst wird, so dass am sich anschließenden Anschlag ein reduziertes Anschlaggeräusch resultiert. Alternativ kann ein Fliehkraftpendel vorgesehen sein, dessen Schwingwinkel der Masseschwerpunkte der Pendelmassen unbegrenzt sind. Auf diese Weise kann zur kompletten Vermeidung von Anschlägen die Bahn des Masseschwerpunkts umlaufend gestaltet werden, so dass die Pendelmassen entlang der Bahn durchschwingen können, der Masseschwerpunkt also einen gedachten Pendelpunkt der Pendelmassen umrundet. Insbesondere bei hohen Beschleunigungen der Pendelmassen können so Bereiche der Bahn erreicht werden, die sonst für den regulären Tilgerbetrieb bei Pendelauslenkung in die entgegengesetzte Richtung vorgesehen sind. Die Pendelmassen können in derartigen Situationen daher überschlagen. Somit können in diesen Fällen zumindest Anschlaggeräusche vermieden, zumindest aber vermindert werden, wenngleich die Tilgerwirkung dabei kurzfristig verloren geht.

Erfindungsgemäß ist eine Bahn für den Masseschwerpunkt einer Pendelmasse so ausgebildet, dass die Pendelmasse im Bereich ausgehend von einer Gleichgewichtslage des Masseschwerpunkts unter Fliehkrafteinwirkung einen Schwingwinkel von etwa ± 90° aufweist, in welchem Schwingwinkel bei vorgegebenem Pendelradius die tilgende Wirkung der Pendelmassen aktiv ist. Bei darüber hinausgehenden Schwingwinkeln ist der Pendelradius bis zu einem erweiterten Schwingwinkel von ca. ± 150° reduziert. Auf diese Weise wird für über der Drehachse des Pendelflansches befindliche Pendelmassen, die bei niedrigen Drehzahlen infolge die Fliehkraft übersteigender Schwerkraft in Richtung Drehachse fallen, auf kleinem Raum am Ende der Bahn eine Aufwärtsbewegung gegen die Schwerkraft erzwungen, was die Bewegung abbremst, den Anschlag mit entsprechend niedrigerer Geschwindigkeit erfolgen lässt und dadurch das Anschlaggeräusch mildert.

Gemäß einem weiteren Ausführungsbeispiel mit umlaufender Bahn, auf der der Masseschwerpunkt den Pendelpunkt dieser umlaufen kann und dadurch Anschläge der Pendelmassen an dem Pendelflansch ausgeschlossen werden, werden die beiden bisherigen Bahnenden für Auslenkungen über die Schwingwinkel während aktiver Tilgung hinaus mit vergrößertem Pendelradius miteinander verbunden. Hierdurch kann die Pendelmasse bei niedrigen Drehzahlen fortlaufend in eine bezüglich potentieller Energie tiefste Position rollen. Bei hohen Beschleunigungen kann der Masseschwerpunkt der Pendelmassen sich überschlagen.

Gemäß einer vorteilhaften Ausführungsform werden die vorgegebenen Bahnen der Pendelmassen durch Ausschnitte in den Pendelmassen und in dem Pendelflansch vorgegeben, wobei jeweils beidseitig des Pendelflansches Pendelmassen angeordnet sind, welche mittels Verbindungsmitteln miteinander verbunden sind und Wälzkörper auf jeweils an den Ausschnitten vorgesehenen Bahnen übergreifend abwälzen. Die in den Pendelmassen beziehungsweise im Pendelflansch vorzusehenden Ausschnitte für die Wälzkörper wie Rollen, welche damit die Verschwenkbewegungen der Pendelmassen gegenüber dem Pendelflansch steuern, und Ausschnitte im Pendelflansch für die Verbindungsmittel wie Bolzen sind gegenüber mit begrenztem Schwingwinkel ausgestatteten Fliehkraftpendeln erweitert und entsprechen damit der größeren Bewegungsfreiheit der Pendelmassen innerhalb des Bauraums des Fliehkraftpendels.

Es hat sich als vorteilhaft gezeigt, die Pendelmassen an zwei den Masseschwerpunkt zwischen sich aufnehmenden, in Umfangsrichtung voneinander beabstandeten Schwenklagern an dem Pendelflansch aufzunehmen, wobei in dem Pendelflansch und in den Pendelmassen eine Pendelbewegung der Pendelmassen erzwingende Bahnen vorgesehen sind, auf denen jeweils Ausschnitte der Pendelmassen und des Pendelflansches durchgreifende Wälzkörper abwälzen. Hierbei ist der sich verringernde oder erweiternde Pendelradius der Pendelwinkel bevorzugt in den Ausschnitten der Pendelmassen vorgesehen.

Zur Begrenzung des Pendelwinkels auf den Bauraum des Fliehkraftpendels sind bezogen auf eine Gleichgewichtslage der Pendelmassen unter Fliehkraft die Anteile der Ausschnitte einer Pendelmasse im Bereich des Pendelwinkels einander bevorzugt zugewandt. Je nach Ausrichtung der Bahnen können die Pendelmassen am Pendelflansch monofilar oder bifilar verschwenkbar aufgenommen sein.

Das Fliehkraftpendel wird bevorzugt in Antriebssträngen eines Kraftfahrzeugs zwischen der Brennkraftmaschine und dem Getriebe eingesetzt und kann dort separat, in einer Kupplungsscheibe einer Reibungskupplung, in einer Reibungskupplung, in einem Zweimassenschwungrad oder in einem hydrodynamischen Drehmomentwandler angeordnet sein.

Die Erfindung wird anhand der in den Figuren 1 bis 8 dargestellten Ausführungsbeispiele näher erläutert. Dabei zeigen:
- Figur 1: ein schematisch dargestelltes Funktionsbeispiel eines Fliehkraftpendels unter Fliehkrafteinwirkung,
- Figur 2: das schematisch dargestellte Funktionsbeispiel der Figur 1 unter Schwerkrafteinwirkung,
- Figur 3: ein mit erweitertem Pendelwinkel versehenes Fliehkraftpendel in schematischer Darstellung,
- Figur 4: ein mit erweitertem Pendelwinkel ausgebildetes Fliehkraftpendel in Ansicht,
- Figur 5: das Fliehkraftpendel der Figur 5 im Schnitt,
- Figur 6: ein Fliehkraftpendel mit unbegrenztem Pendelwinkel in schematischer Darstellung,
- Figur 7: ein Fliehkraftpendel mit unbegrenztem Pendelwinkel in Ansicht und
- Figur 8: das Fliehkraftpendel der Figur 7 im Schnitt.

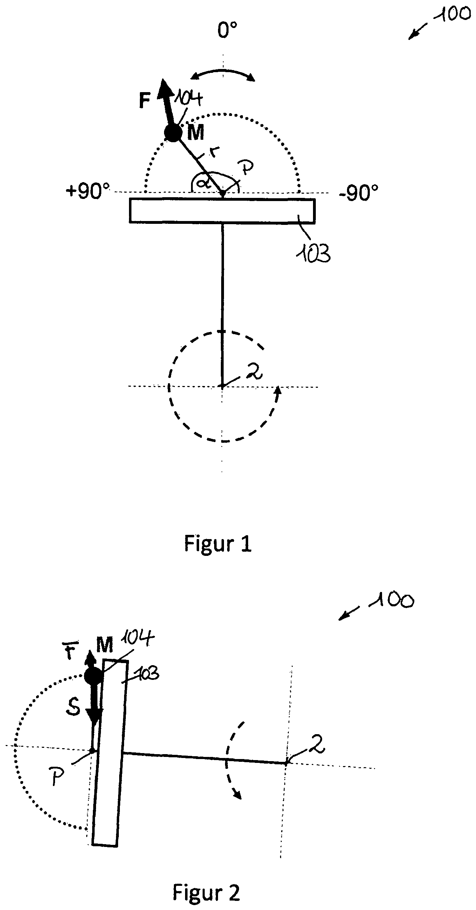

Figur 1 zeigt die Grundfunktion des Fliehkraftpendels 100 mit dem um die Drehachse 2 drehenden Pendelflansch 103 und einer gegenüber dem Pendelflansch verschwenkbar an dem Pendelpunkt P aufgehängten Pendelmasse 104 mit dem Masseschwerpunkt M. Bei konstanter Drehzahl wird der Masseschwerpunkt M durch die Fliehkraft F nach radial außen beschleunigt und befindet sich in der Gleichgewichtslage bei 0°. Treten Drehschwingungen an der Drehachse 2 auf, wird abhängig vom Vorzeichen des dabei auf den Pendelflansch 103 kurzzeitig übertragenen Übermoments der Masseschwerpunkt M gegen die Fliehkraft F nach radial innen entlang des Schwingwinkels α ausgelenkt und anschließend wieder rückgeführt, so dass bei Abstimmung des Pendelradius r, der Pendelmasse und des Schwingwinkels α auftretende Erregerfrequenzen drehzahladaptiv getilgt werden. Der Schwingwinkel α ist hier auf ± 90° begrenzt. Bei Erreichen des maximalen Schwingwinkels schlägt die Pendelmasse 104 an entsprechenden Anschlägen an dem Pendelflansch 103 an, um beispielsweise den Bauraum des Fliehkraftpendels 100 zu begrenzen und den Pendelmassen 104 nicht zu erlauben, über den vorgegebenen Bauraum hinaus auszuschwenken.

Figur 2 zeigt einen Betriebszustand des Fliehkraftpendels 100 bei mit niedrigen Drehzahlen um die Drehachse 2 drehendem oder stehendem Pendelflansch 103, bei dem der Masseschwerpunkt M oberhalb des Pendelpunkts P der Pendelmasse 104 angeordnet ist. Infolge des betragsmäßig geringeren Anteils der Fliehkraft F gegenüber der Schwerkraft S fällt die Pendelmasse 104 vom durch höhere Drehzahlen erzwungenen radial äußeren Anschlag in den Anschlag mit geringerer potentieller Energie am Pendelflansch 103 und verursacht dadurch Anschlaggeräusche, wenn beispielsweise ein mit dem Fliehkraftpendel 100 ausgestatteter Antriebsstrang stillgelegt wird. Gemäß dem Stand der Technik werden Anschlaggeräusche mittels zusätzlich zwischen Pendelmassen 104 und Pendelflansch 103 angeordneter Elastomerelemente gedämpft.

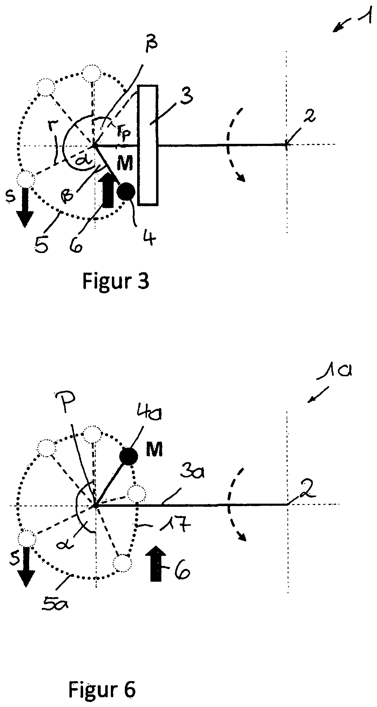

Figur 3 zeigt das Fliehkraftpendel 1 mit der vorgeschlagenen Anschlagdämpfung der an dem um die Drehachse 2 drehenden Pendelflansch 3 verschwenkbar aufgenommenen Pendelmassen 4. Gegenüber der im Tilgungsbetrieb wirksamen Bahn 5 der Pendelmassen 4 mit dem Schwingwinkel α ist ein erweiterter Pendelwinkel β vorgesehen, der sich an den Schwingwinkel a jeweils beidseitig anschließt und einen gegenüber dem Pendelradius r verringerten Pendelradius r_{P} aufweist, so dass bei infolge Schwerkraft nach unten fallender Pendelmasse 4 diese an dem kleineren Pendelradius r_{P} entlang des Pendelwinkels β entgegen der Schwerkraft S in Richtung des Pfeils 6 verlangsamt wird und dann mit geringerer Energie an dem Pendelflansch 3 anschlägt.

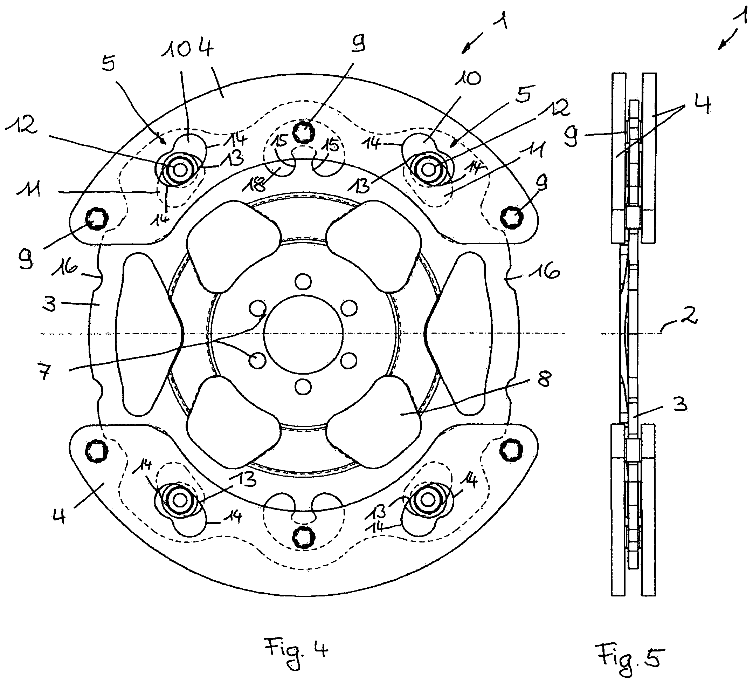

Die Figuren 4 und 5 zeigen eine konstruktive Ausführungsform des Fliehkraftpendels 1 in Ansicht und im Schnitt, wie es beispielsweise in einer Kupplungsscheibe zum Einsatz kommt. Der um die Drehachse 2 verdrehbare Pendelflansch 3 weist hierzu Aufnahmen 7 und Ausschnitte 8 zur Aufnahme von Energiespeichern auf. Radial außerhalb dieser sind beidseitig des Pendelflansches je zwei Pendelmassen 4 aufgenommen, wobei die an den Seiten gegenüberliegenden Pendelmassen 4 mittels Verbindungsmitteln 9 wie Bolzen miteinander verbunden sind. Die Bahnen 5 der Pendelmassen 4 gegenüber dem Pendelflansch 3 werden durch Form und Ausbildung der in dem Pendelflansch 3 und in den Pendelmassen 4 vorgesehenen Ausschnitte 10, 11 vorgegeben, auf deren Laufflächen die die Ausschnitte 10, 11 des Pendelflansches 3 und beider gegenüber angeordneter Pendelmassen 4 durchgreifende Wälzkörper 12 abwälzen. Die Ausschnitte 10 der Pendelmassen 4 weisen einen ersten Laufflächenabschnitt 13 auf, der der Verlagerung der Pendelmassen 4 im aktiven Tilgerbereich bei vorgegebenem Schwingwinkel entspricht und in Zusammenhang mit den Ausschnitten 11 des Pendelflansches 3 einen ersten Pendelradius einstellt. Der gegenüber dem Schwingwinkel erweiterte Pendelwinkel weist einen zweiten Laufflächenabschnitt 14 auf, der in Zusammenhang mit den Ausschnitten 11 des Pendelflansches einen kleineren Pendelradius als den ersten Pendelradius bedingt, so dass die über der Drehachse 2 befindlichen Pendelmassen 4 bei geringer Drehzahl des Pendelflansches 3 infolge Schwerkraft nicht ungebremst nach unten fallen sondern außerhalb des Schwingwinkels entgegen der Schwerkraft umgelenkt werden und mit verringerter Energie an dem Pendelflansch 3 anschlagen. Der Anschlag kann dabei zwischen den Verbindungsmitteln 9 und an dem Pendelflansch vorgesehenen Anschlägen 15 in den Ausschnitten 18 für die Verbindungsmittel 9 und die Ausschnitte 18 am Außenumfang des Pendelflansches 3 erfolgen.

Figur 6 zeigt schematisch eine alternative Ausführungsform eines Fliehkraftpendels 1a, bei dem die Pendelmasse 4a gegenüber dem um die Drehachse 2 verdrehbaren Pendelflansch 3a nicht anschlagsbegrenzt ist. Vielmehr ist die über den Schwingwinkel α erstreckte Bahn 5a im aktiven Tilgerbereich mittels der mit größerem Pendelradius versehenen Bahn 17 beidseitig erweitert, wobei der Pendelpunkt der Bahn 17 nicht mit dem Pendelpunkt P der Bahn 5a zusammenfällt, so dass der Pendelradius des Masseschwerpunkts M entlang der Bahn 17 gegenüber dem Pendelradius der Bahn 5a verkürzt ist. Fällt die Pendelmasse 4a infolge Schwerkraft S nach unten, schwingt die Pendelmasse 4a entgegen der Schwerkraft S in Richtung des Pfeils nach oben und kann bei ausreichender Energie den Pendelpunkt P überschlagen. Hierdurch werden geräuschbildende Anschläge zwischen Pendelmassen 4a und Pendelflansch 3a im Wesentlichen vermieden.

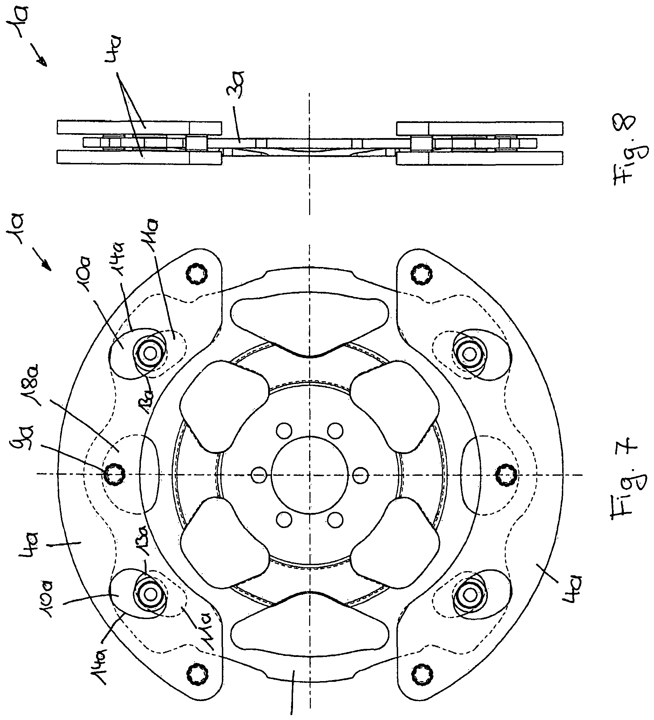

Die Figuren 7 und 8 zeigen eine konstruktive Ausführungsform des Fliehkraftpendels 1a der Figur 6 in Ansicht und im Schnitt. Durch die Ausbildung der Ausschnitte 10a, 11a in den Pendelmassen 4a und im Pendelflansch 3a und die Erweiterung der Ausschnitte 18a für die Verbindungsmittel 9a wird eine Anschlagsbildung der Pendelmassen 4a gegenüber dem Pendelflansch 3a vermieden. Hierbei sind an den Ausschnitten 10a der Pendelmassen 4a Laufflächenabschnitte 13a vorgesehen, die in Verbindung mit den Laufflächen der Ausschnitte 11a des Pendelflansches den aktiven Tilgerbereich bilden. Die sich beidseitig an die Laufflächenabschnitte 13a anschließenden Laufflächenabschnitte 14a ermöglichen das Überschlagen der Pendelmassen 4a und damit einen Energieabbau ohne Anschlag an dem Pendelflansch 3a.

### Bezugszeichenliste

- 1: Fliehkraftpendel
- 1a: Fliehkraftpendel
- 2: Drehachse
- 3: Pendelflansch
- 3a: Pendelflansch
- 4: Pendelmasse
- 4a: Pendelmasse
- 5: Bahn
- 5a: Bahn
- 6: Pfeil
- 7: Aufnahme
- 8: Ausschnitt
- 9: Verbindungsmittel
- 9a: Verbindungsmittel
- 10: Ausschnitt
- 10a: Ausschnitt
- 11: Ausschnitt
- 11a: Ausschnitt
- 12: Wälzkörper
- 13: Laufflächenabschnitt
- 13a: Laufflächenabschnitt
- 14: Laufflächenabschnitt
- 14a: Laufflächenabschnitt
- 15: Anschlag
- 16: Anschlag
- 17: Bahn
- 18: Ausschnitt
- 18a: Ausschnitt
- 100: Fliehkraftpendel
- 103: Pendelflansch
- 104: Pendelmasse
- F: Fliehkraft
- M: Masseschwerpunkt
- P: Pendelpunkt
- r: Pendelradius
- r_{P}: Pendelradius
- S: Schwerkraft
- α: Schwingwinkel
- β: Pendelwinkel

## Patentansprüche

1. Fliehkraftpendel (1, 1a) mit einem um eine Drehachse (2) verdrehbar angeordneten Pendelflansch (3, 3a) und mehreren zur drehzahladaptiven Tilgung von in den Pendelflansch (3, 3a) eingetragenen Drehschwingungen mit einem Masseschwerpunkt (M) um zumindest einen Pendelpunkt (P) mit vorgegebenem Pendelradius (r) und vorgegebenem Schwingwinkel (α) verschwenkbar aufgenommenen Pendelmassen (4, 4a), wobei der vorgegebene Schwingwinkel (α) um einen Pendelwinkel (β) mit einem gegenüber dem Pendelradius (r) verändertem Pendelradius (r_{P}) erweitert ist, **dadurch gekennzeichnet, dass** der erweiterte Pendelwinkel (β) zwischen ± 90° und ± 150° ist und der Pendelradius (r_{P}) im Bereich des Pendelwinkels (β) gegenüber dem Pendelradius (r) im Bereich des Schwingwinkels (α) verkleinert ist.

2. Fliehkraftpendel (1a) nach Anspruch 1, **dadurch gekennzeichnet, dass** der Pendelwinkel des Masseschwerpunkts (M) unbegrenzt ist und der Pendelradius im Bereich des Pendelwinkels größer als der Pendelwinkel im Bereich des Schwingwinkels (α) ist.

3. Fliehkraftpendel (1, 1a) nach einem der Ansprüche 1 oder 2, **dadurch gekennzeichnet, dass** die Pendelmassen (4, 4a) an zwei den Masseschwerpunkt (M) zwischen sich aufnehmenden, in Umfangsrichtung voneinander beabstandeten Schwenklagern an dem Pendelflansch (3, 3a) aufgenommen sind, wobei in dem Pendelflansch (3, 3a) und in den Pendelmassen (4, 4a) eine Pendelbewegung der Pendelmassen (4, 4a) erzwingende Bahnen (5, 5a, 17) vorgesehen sind, auf denen jeweils Ausschnitte (10, 10a, 11, 11a) der Pendelmassen (4, 4a) und des Pendelflansches (3, 3a) durchgreifende Wälzkörper (12) abwälzen.

4. Fliehkraftpendel (1, 1a) nach Anspruch 3, **dadurch gekennzeichnet, dass** der sich verringernde oder erweiternde Pendelradius in den Ausschnitten (10, 10a) der Pendelmassen (4, 4a) vorgesehen ist.

5. Fliehkraftpendel (1, 1a) nach Anspruch 4, **dadurch gekennzeichnet, dass** bezogen auf eine Gleichgewichtslage der Pendelmassen (4, 4a) unter Fliehkraft die Laufflächenabschnitte (14, 14a) der Ausschnitte (10, 10a) einer Pendelmasse (4, 4a) mit vermindertem Pendelradius einander zugewandt sind.

6. Fliehkraftpendel (1, 1a) nach einem der Ansprüche 1 bis 5, **dadurch gekennzeichnet, dass** die Pendelmassen (4, 4a) am Pendelflansch (3, 3a) monofilar oder bifilar verschwenkbar aufgenommen sind.

7. Fliehkraftpendel (1, 1a) nach einem der Ansprüche 1 bis 6 in einer Kupplungsscheibe einer Reibungskupplung, in einer Reibungskupplung, in einem Zweimassenschwungrad oder in einem hydrodynamischen Drehmomentwandler.

## Claims

1. Centrifugal force pendulum (1, 1a) having a pendulum flange (3, 3a) which is arranged such that it can rotate about an axis of rotation (2), and has a plurality of pendulum masses (4, 4a) which, for the speed-adaptive damping of rotational oscillations introduced into the pendulum flange (3, 3a), are held so as to be pivotable with a centre of mass (M) about at least one pendulum point (P) with a predefined pendulum radius (r) and a predefined swing angle (α) wherein the predefined swing angle (α) is widened by a pendulum angle (β) with a pendulum radius (r_{P}) that is changed with respect to the pendulum radius (r),
**characterized in that** the widened pendulum angle (β) is between ± 90° and ± 150°, and the pendulum radius (r_{P}) in the region of the pendulum angle (β) is reduced with respect to the pendulum radius (r) in the region of the swing angle (α).

2. Centrifugal force pendulum (1a) according to Claim 1, **characterized in that** the pendulum angle of the centre of mass (M) is unlimited, and the pendulum radius in the region of the pendulum angle is greater than the pendulum angle in the region of the swing angle (α).

3. Centrifugal force pendulum (1, 1a) according to either of Claims 1 and 2, **characterized in that** the pendulum masses (4, 4a) are held on the pendulum flange (3, 3a) on two pivot bearings spaced apart from each other in the circumferential direction, holding the centre of mass (M) between them, wherein, in the pendulum flange (3, 3a) and in the pendulum masses (4, 4a), tracks (5, 5a, 17) enforcing a pendulum movement of the pendulum masses (4, 4a) are provided, on each of which rolling elements (12) which engage through cut-outs (10, 10a, 11, 11a) of the pendulum masses (4, 4a) and of the pendulum flange (3, 3a) roll.

4. Centrifugal force pendulum (1, 1a) according to Claim 3, **characterized in that** the decreasing or widening pendulum radius is provided in the cut-outs (10, 10a) of the pendulum masses (4, 4a).

5. Centrifugal force pendulum (1, 1a) according to Claim 4, **characterized in that**, in relation to an equilibrium position of the pendulum masses (4, 4a), under centrifugal force the running surface sections (14, 14a) of the cut-outs (10, 10a) of a pendulum mass (4, 4a) face each other with a reduced pendulum radius.

6. Centrifugal force pendulum (1, 1a) according to one of Claims 1 to 5, **characterized in that** the pendulum masses (4, 4a) are held on the pendulum flange (3, 3a) such that they can pivot in a monofilar or bifilar fashion

7. Centrifugal force pendulum (1, 1a) according to one of Claims 1 to 6 in a clutch disc of a friction clutch, in a friction clutch in a dual-mass flywheel or in a hydrodynamic torque converter.

## Revendications

1. Pendule centrifuge (1, 1a) comprenant une bride pendulaire (3, 3a) pouvant tourner sur un axe de rotation (2) et une pluralité de masses pendulaires (4, 4a) logées de manière à pouvoir pivoter autour d'un point de pendule (P) avec un rayon de pendule prédéterminé (r) et un angle d'oscillation prédéterminé (α) pour amortir, de manière adaptative en termes de vitesse de rotation, des oscillations de rotation communiquées dans la bride de pendule (3, 3a) avec un centre de gravité (M), l'angle d'oscillation prédéterminé (α) étant étendu d'un angle de pendule (β) dont le rayon de pendule (r_{P}) est modifié par rapport au rayon de pendule (r),
**caractérisé en ce que** l'angle de pendule étendu (β) est compris entre ±90° et ±150° et le rayon de pendule (rp) dans la plage de l'angle de pendule (β) est réduit par rapport au rayon de pendule (r) dans la plage de l'angle d'oscillation (α).

2. Pendule centrifuge (1a) selon la revendication 1, **caractérisé en ce que** l'angle de pendule du centre de gravité (M) n'est pas limité et le rayon de pendule dans la plage de l'angle de pendule est supérieur à l'angle de pendule dans la plage de l'angle d'oscillation (α).

3. Pendule centrifuge (1, 1a) selon l'une des revendications 1 ou 2, **caractérisé en ce que** les masses pendulaires (4, 4a) sont logées au niveau de la bride pendulaire (3, 3a) au niveau de deux paliers de pivotement espacés l'un de l'autre dans la direction circonférentielle et recevant entre eux le centre de gravité (M), des pistes (5, 5a, 17) forçant un mouvement pendulaire des masses pendulaires (4, 4a) étant prévues dans la bride pendulaire (3, 3a) et dans les masses pendulaires (4, 4a), des éléments de roulement (12), qui passent à travers des découpes (10, 10a, 11, 11a) des masses pendulaires (4, 4a) et de la bride pendulaire (3, 3a), roulant respectivement sur ces pistes.

4. Pendule centrifuge (1, 1a) selon la revendication 3, **caractérisé en ce que** le rayon de pendule qui se réduit ou s'étend est prévu dans les découpes (10, 10a) des masses pendulaires (4, 4a).

5. Pendule centrifuge (1, 1a) selon la revendication 4, **caractérisé en ce que** les portions de surface de roulement (14, 14a) des découpes (10, 10a) d'une masse pendulaire (4, 4a) sont dirigées les unes vers les autres, avec un rayon de pendule qui se réduit, sous l'action de la force centrifuge par rapport à une position d'équilibre des masses pendulaires (4, 4a).

6. Pendule centrifuge (1, 1a) selon l'une des revendications 1 à 5, **caractérisé en ce que** les masses pendulaires (4, 4a) sont logées au niveau de la bride pendulaire (3, 3a) de manière à pouvoir pivoter de façon monofilaire ou bifilaire.

7. Pendule centrifuge (1, 1a) selon l'une des revendications 1 à 6, placée dans un disque d'embrayage d'un embrayage à friction, dans un embrayage à friction, dans un volant à deux masses ou dans un convertisseur de couple hydrodynamique.
